# EUROPEAN PATENT SPECIFICATION

(11) **EP 3 073 795 B1**
(45) Date of publication and mention of the grant of the patent: **02.05.2018**
(21) Application number: 15160935.1
(22) Date of filing: 25.03.2015
(51) Int. Cl.: H04W 72/04, H04L 29/06

(54) **WIRELESS CONFERENCING SYSTEM AND METHOD FOR CONFIGURING SAME**
DRAHTLOSES KONFERENZSYSTEM UND VERFAHREN ZU DESSEN KONFIGURATION
SYSTÈME DE TÉLÉCONFÉRENCE SANS FIL ET SON PROCÉDÉ DE CONFIGURATION

(43) Date of publication of application: 28.09.2016
(73) Proprietor: Televic Conference NV, 8870 Izegem (BE)
(72) Inventor: Gesquiere, John, B-8970 Poperinge (BE); Soubry, Vincent, B-8870 Izegem (BE); Cardoen, Pieter, B-8980 Passendale (BE); Vlaemynck, Stefaan, B-8730 Beernem (BE)
(74) Representative: Beck, Michaël Andries T.

(56) References cited:
- WO-A2-2010/044599
- US-A1- 2010 151 865

## Description

### Field of the Invention

The present invention pertains to wireless conferencing systems, and in particular to methods for configuring such systems.

### Background

In conferencing systems, conference terminals (or "delegate units") allow individual delegates to transmit and receive audio and optionally video, in particular delegates' speech and/or translations thereof, and data to and from each other, optionally via one or more centralized servers or access points.

In wireless conferencing systems, a relatively large number of conference terminals must be able to communicate with each other and/or with an access point via radio waves in a limited space and in a limited spectrum. The effectively available bandwidth in known systems is limited by the interference between transmissions from different conference terminals. Moreover, the configuration of such systems tends to be complicated and time consuming.

WO 2010/044599 A2 discloses a system to establish direct wireless exchange using directional antenna beams, comprising a discovery phase to determine the direction of a beam. The location of the destination terminal is determined and used to direct the directional beam to the location of the destination. It is a purpose of embodiments of the present invention to provide a wireless conferencing system that has a more efficient spectrum use and that is easy to configure.

### Summary of the invention

According to an aspect of the present invention, there is provided a method for configuring a wireless conferencing system comprising a plurality of conference terminals in an indoor environment, each of the conference terminals being equipped with a transceiver adapted to operate in a first mode and a second mode, the first mode being an omnidirectional mode and the second mode being a directional mode, the method comprising: in a discovery phase, for each pair of conference terminals, discovering a number of directions in which a direct wireless exchange of signals between the pair of conference terminals is possible, by operating a first one of the pair of conference terminals in the first mode and a second one of the pair of conference terminals in the second mode and attempting to exchange first signals while the transceiver of the second conference terminal is operated so as to vary a direction of operation; for a first one of the plurality of conference terminals and a second one of the plurality of conference terminals, selecting a first one of the number of directions in which the direct wireless exchange of signals between the first one of the plurality of conference terminals and the second one of the plurality of conference terminals is possible as an active transmission direction;in an operational phase, sending second signals from the first one of the plurality of conference terminals to the second one of the plurality of conference terminals, using the active transmission direction; and, in a primary recovery phase, if a failure in the sending of the second signals is detected and if the discovering resulted in at least two directions in which the direct wireless exchange between the first one of the plurality of conference terminals and the second one of the plurality of conference terminals is possible, selecting a second one of the number of directions in which direct wireless exchange of signals between the first one of the plurality of conference terminals and the second one of the plurality of conference terminals is possible as a new active transmission direction, and sending third signals from the first one of the plurality of conference terminals to the second one of the plurality of conference terminals, using the new active transmission direction.

The present invention is based *inter alia* on the insight of the inventors that directional transmission (such as beam forming) can advantageously be used in wireless conferencing systems to use the available bandwidth more efficiently, by setting up the wireless network as a collection of directional point-to-point links rather than an omnidirectional broadcast network. The present invention is further based on the insight of the inventors that by judiciously using transceivers that can be switched between an omnidirectional mode and a directional mode, the conference terminals can be made to scan for directions in which direct wireless communication with other conference terminals is possible, thus simplifying the setting up of the conferencing system. In the present application, the term "direct wireless communication" or "direct wireless exchange" is used to designate wireless communication between two conference terminals via a directional transceiver, whether entirely through free space or using reflections off elements in the environment, without intervention of an intermediate (relaying) transceiver.

The "indoor environment" may be any conference room, conference hall, office space, dwelling, mall, or the like.

The "directional mode" may be a beam-forming mode or a mode using a sectorial antenna to substantially direct the power at the output of the antenna in a particular direction.

The "scanning"-based discovery process may be sped up by using a heuristic, for instance based on information about the geometry of the indoor space in which the conferencing system is deployed. This information may be provided specifically for the actual indoor space used, or it may be generic (such as, by way of example, the following set of assumptions: all conference terminals other than the access point are located at approximately the same desk height x, the access point is located at height *x*+*d*, there is a substantially horizontal ceiling surface at height y, the room is substantially rectangular).

It is an advantage of the present invention that multiple possible paths (directions) for direct wireless transmission between pairs of conference terminals are discovered, if available, and that a switch-over from one such path to another such path is performed when the first path becomes unavailable due to interference, fading, temporary presence of an obstacle in the path, or the like.

In an embodiment, the method according to the present invention further comprises: in a secondary recovery phase, if a failure in the sending of the second signals or the sending of the third signals is detected, sending fourth signals from the first one of the plurality of conference terminals to a third one of the plurality of conference terminals, using a first one of the number of directions in which the direct wireless exchange of signals between the first one of the plurality of conference terminals and the third one of the plurality of conference terminals is possible, the third one of the plurality of conference terminals being used as a relay for reaching the second one of the plurality of conference terminals.

It is a further advantage of this embodiment that if no path is available for direct wireless transmission between a given pair of conference terminals, communication is still made possible by switching-over to a relayed mode, where a third conference terminal takes up the role of a relay node. It will be understood that the link between any given pair of conference terminals may pass through multiple nodes, if necessary. It will be further understood that, in a given system, multiple pairs of conference terminals may be in a situation where no direct wireless communication is possible, and that the system is then in a mode where most links use relays; the system will then effectively operate as a meshed network.

Preferably, the secondary recovery phase is initiated only if the discovering did not result in other directions in which direct wireless exchange between the first one of the plurality of conference terminals the said second one of the plurality of conference terminals is possible, i.e. if there is no further possibility to remedy the situation by a further primary recovery. Accordingly, the secondary recovery phase would be initiated if the discovery revealed only one direct wireless exchange path between the given pair of conference terminals, which path is presently unavailable, or if the discovery revealed multiple direct wireless exchange paths between the given pair of conference terminals, all of which are presently unavailable.

In an embodiment of the method according to the present invention, the transceiver operates in an ISM band between 57 GHz and 66 GHz.

It is an advantage of this embodiment that it allows highly directional beam forming. It is a further advantage of this embodiment that it allows beams to bounce off walls, ceilings, or objects, thus increasing the chances of finding a path for direct wireless exchange between any two given locations in an indoor environment. It is a further advantage of this embodiment that it substantially confines the wireless transmissions to the indoor environment, which is a privacy benefit, as radio waves in this frequency range do not significantly traverse walls or structural elements. It is a further advantage of this embodiment that it uses an unlicensed band.

In an embodiment, the method according to the present invention further comprises: arranging reflectors in the indoor environment to provide additional physical paths corresponding to additional directions in which an exchange of signals between pairs of conference terminals is possible.

It is a further advantage of this embodiment that it allows directed electromagnetic radiation (beams) to bounce off judiciously placed reflectors, thus increasing the chances of finding a path for direct wireless exchange between any two given locations in an indoor environment. The reflectors according to this embodiment may be passive reflectors, i.e. objects whose geometry and material are chosen so as to be conducive to reflecting the radio waves emitted by the conference terminals, or active reflectors, i.e. devices capable of receiving and retransmitting the signals emitted by the conference terminals, thus acting as a (directional) repeater.

In an embodiment of the method according to the present invention, the conference terminals are adapted to visually and/or audibly signal, during the discovery phase, the detection of directions in which an exchange of signals with another one of the plurality of conference terminals is possible.

This embodiment facilitates the setting up of the indoor environment, because it provides direct feedback about the availability of links to the installer, while the latter positions the conference terminals and/or reflectors.

In an embodiment, the method according to the present invention further comprises: running a spanning tree protocol between the plurality of conference terminals, wherein each switch-over between the first one and the second one of the number of directions in which the exchange of signals between the first one of the plurality of conference terminals and the second one of the plurality of conference terminals is possible occurs in accordance with the spanning tree protocol.

It is an advantage of this embodiment that it provides a logical network topology in which every conference terminal is able to communicate with every other conference terminal, either directly or through other conference terminals, without having any loops in the network. The various paths (or directions) that are available for transmission between a conference terminal and its peers are treated as different links for the purpose of the spanning tree protocol, each of which is assigned a different cost or weight. Depending on the application, this cost or weight may take into account signal-to-noise ratio, available bitrate, bit error rate, latency, link stability, and similar metrics. Thus, the selecting of the first direction and the second direction, as referred to above, occurs in accordance with the spanning tree protocol.

In a particular embodiment of the method according to the present invention, one of the plurality of conference terminals is an access point.

In this embodiment, the spanning tree ensures that every other conference terminal has a (and only one) connection to the access point, which coordinates the receipt and (re)transmission of the information (e.g., audio signals) of the conference delegates, and which may further provide access to another network (e.g., a wide-area network).

According to an aspect of the present invention, there is provided a computer program product comprising code means configured to cause a processor to carry out the steps of a conference terminal in a method as described above.

According to an aspect of the present invention, there is provided a wireless conferencing system comprising a plurality of conference terminals, each of the conference terminals being equipped a with transceiver adapted to operate in a first mode and a second mode, the first mode being an omnidirectional mode and the second mode being a directional mode, wherein each of the conference terminals is configured to: in a discovery phase, for each other conference terminal, discover a number of directions in which a direct wireless exchange of signals with the other conference terminal is possible, by operating the conference terminal in the first mode and the other conference terminal in the second mode and attempting to exchange first signals while the transceiver of the other conference terminal is operated so as to vary a direction of operation, or vice versa; for another one of the plurality of conference terminals, selecting a first one of the number of directions in which direct wireless exchange of signals with the other one of the plurality of conference terminals is possible as an active transmission direction; in an operational phase, send second signals to the other one of the plurality of conference terminals, using the active transmission direction; and, in a primary recovery phase, if a failure in the sending of the second signals is detected and if the discovering resulted in at least two directions in which the direct wireless exchange with the other conference terminal is possible, select a second one of the number of directions in which direct wireless exchange of signals with the other conference terminal is possible as a new active transmission direction, and send third signals to the other conference terminal, using the new active transmission direction.

In an embodiment of the system according to the present invention, each of the conference terminals is further configured to: in a secondary recovery phase, if a failure in the sending of the second signals is detected, send fourth signals to a third one of the plurality of conference terminals, using a first one of the number of directions in which the direct wireless exchange of signals with the third one of the plurality of conference terminals is possible, the third one of the plurality of conference terminals being used as a relay for reaching the other conference terminal.

In an embodiment of the system according to the present invention, the transceivers operate in an ISM band between 57 GHz and 66 GHz.

In an embodiment, the system according to the present invention further comprises reflectors arranged in the indoor environment to provide additional physical paths corresponding to additional directions in which an exchange of signals between pairs of conference terminals is possible.

In an embodiment of the system according to the present invention, the conference terminals are adapted to visually and/or audibly signal, during the discovery phase, the detection of directions in which an exchange of signals with another one of the plurality of conference terminals is possible.

In an embodiment of the system according to the present invention, the conference terminals are further configured to run a spanning tree protocol, wherein each switch-over between directions in which the exchange of signals with the other conference terminal is possible occurs in accordance with the spanning tree protocol. In an embodiment of the system according to the present invention, one of the plurality of conference terminals is an access point.

According to an aspect of the present invention, there is provided a conference terminal for use in a method or a system as described above.

The technical effects and advantages of the embodiments of the computer program product, the system, and the conference terminal according to the present invention correspond *mutatis mutandis* to those of the corresponding embodiments of the method according to the present invention.

### Brief Description of the Figures

These and other technical effects and advantages of embodiments of the present invention will now be further described with reference to the accompanying drawings, in which:
- Figure 1 provides a flow chart of a method according to an embodiment of the present invention; and
- Figure 2 provides diagrams of a system according to an embodiment of the present invention in different phases.

### Description of Embodiments

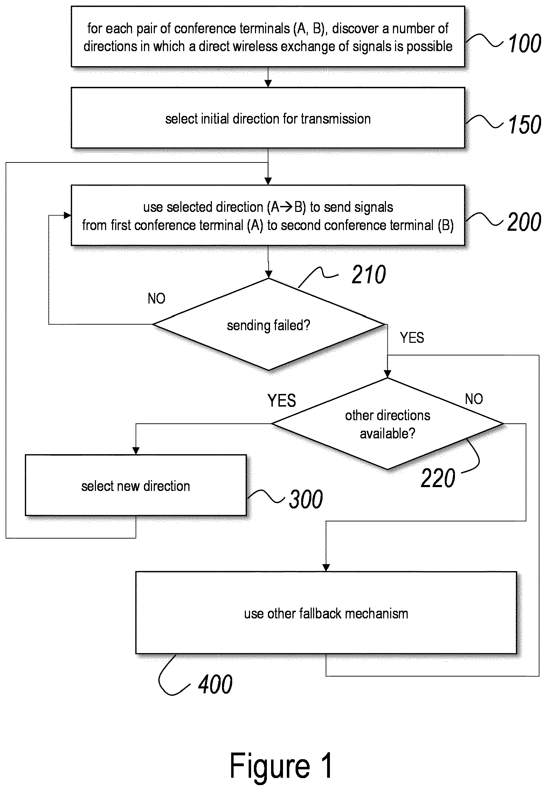

Figure 1 provides a flow chart of a method for configuring a wireless conferencing system comprising a plurality of conference terminals in an indoor environment, according to an embodiment of the present invention. Each of the conference terminals is equipped with a transceiver adapted to operate in an omnidirectional mode and a directional mode, preferably a beam forming mode. The transceiver preferably operates in an ISM band between 57 GHz and 66 GHz, more preferably (for China) between 59 GHz and 64 GHz, or (for North America) between 57 GHz and 64 GHz.

In a discovery phase **100**, the directions in which a direct wireless exchange of signals is possible between each pair of conference terminals is discovered. This is done by operating one of each pair of conference terminals in omnidirectional mode and the other one in directional mode, the latter being configured to scan space so as to identify those directions in which an exchange of signals between both is successful.

The "scanning" occurs by cycling the antenna array of the transceiver through a range of parameters that correspond to different transmission directions. Optionally, the antenna array may be equipped with means to mechanically rotate it, such as a stepping motor, to provide greater spatial coverage. Optionally, the conference terminal may be equipped with a built-in reflector, to allow beams to be directed in further directions.

The identified directions may correspond to a straight ("line of sight") communication path between both conference terminals, or to a communication path involving one or more reflections (e.g., a reflection off the ceiling). Generally, more than one communication path will be available, typically with increasing latency and decreasing signal-to-noise ratio for increasing numbers of intermediate reflections.

Based on the results of the discovery phase **100**, and taking into account an appropriate cost function, a first one of the identified directions is selected as an initial direction for transmission **150**. In an operational phase **200**, signals are exchanged between a pair of conference terminals in directional mode, using the selected direction.

If the first path becomes unavailable due to interference, fading, temporary presence of an obstacle in the path, or the like (**210**, "YES" branch), the primary recovery phase is initiated. If more than one transmission direction was identified during discovery (**220**, "YES" branch), a second one of the identified directions is selected **300**, and signals are then sent using the newly selected direction **200.**

If no other direction is available for transmission (**220**, "NO" branch), the optional secondary recovery **400** may be initiated, in which signals are sent to another conference terminal, which then functions as a relay to reach the originally targeted conference terminal. The availability of directions for transmission may be checked intermittently or continuously, to allow the system to return to the regular operational phase **200** as soon as possible, upon selecting **300** an appropriate direction for transmission.

Additionally or alternatively, the secondary recovery **400** may include attempting to restore connectivity by using other available communication technology, such as IEEE Std 802.11 ("WiFi") communication, mobile communication, and the like, if the conference terminals are equipped with the appropriate transceivers for that purpose.

The discovery phase **100** may be completed for all conference terminals prior to proceeding to the operational phase **200** for any of the terminals. Any pair of conference terminals may independently cycle through the operational phase **200**, the primary recovery phase **300**, and the secondary recovery phase **400** as necessary in function of the occurrence of disturbances. Optionally, one or more pairs of conference terminals may reinitiate a discovery phase **100** if it turns out to be impossible to communicate for a predetermined amount of time. Optionally, the conference terminals may include means to detect movement (such as an accelerometer), and the conference terminals may be configured to trigger a new discovery phase **100** when a predetermined amount of movement is detected.

The switch-over between the different available paths (directions) is preferably performed in accordance with a spanning tree protocol, to avoid loops in the network and to ensure efficient connectivity between an access point and each other conference terminal. Preferably, the conference terminals exchange information about the nature and quality of the connections they have (or can have) with their neighbors, so as to allow the selection of the most efficient active network topology. While a spanning tree protocol is typically a distributed protocol, it is also possible to let the access point select and impose a particular active network topology.

While most conference terminals will be present in or near a common horizontal plane (typically at desk height), the access point may be installed at a more elevated position, to increase the chance of having a line-of-sight connection between the access point and each other conference terminal. The position of the access point may be constrained by the availability of AC power and/or a wired network connection (e.g. an Ethernet connection).

In the assumption that most conference terminals will be present in or near a common horizontal plane, the information about the discovered line-of-sight paths between the various conference terminals (in particular, signal time-of-flight, latency and signal-to-noise ratio, which may be used to estimate link distance) may be used to produce a two-dimensional plan of the relative positions of the conference terminals. Such a plan may be useful to the conference organizers or moderators, so as to know which conference terminal is associated with which delegate.

Reflectors may be arranged in the indoor environment to provide additional physical paths corresponding to additional directions in which an exchange of signals between pairs of conference terminals is possible. While the reflectors are being (tentatively) positioned, the conference terminals may perform the discovery phase **100** and visually and/or audibly signal the detection of directions in which an exchange of signals with another one of the conference terminals is possible, thus giving the person(s) that are positioning the reflectors immediate feedback about the adequacy of the chosen positions.

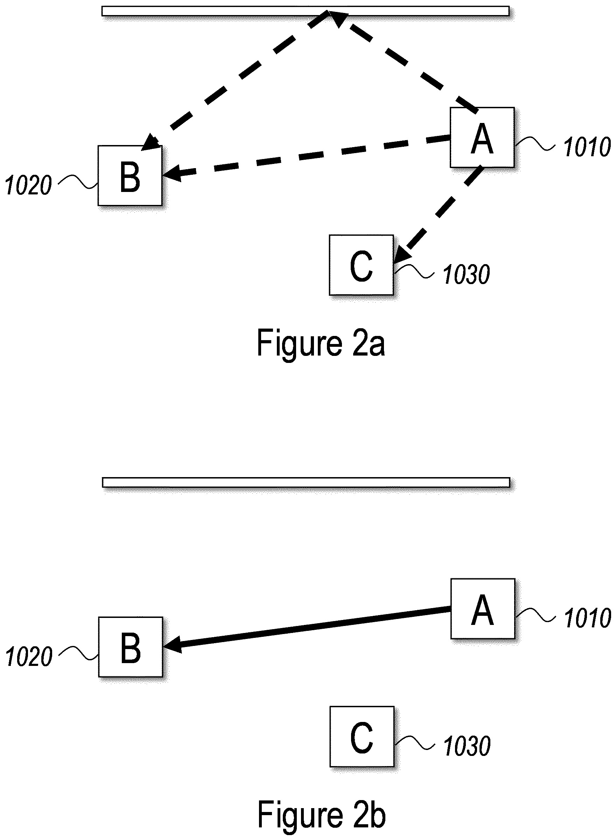

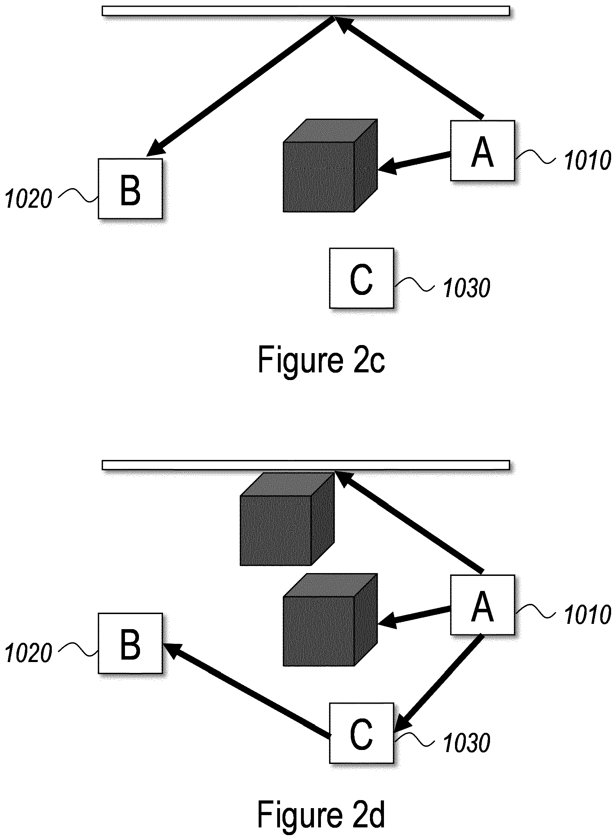

Figure 2 provides diagrams of a system according to an embodiment of the present invention in different phases. Without loss of generality, three conference terminals **1010**, **1020**, **1030** are shown. In the illustrated example, conference terminal A **1010** attempts to communicate with conference terminal B **1020**.

In figure 2a, representing the discovery phase **100**, different transmission directions are discovered between conference terminal A **1010** (shown as transmitter) and its peers B **1020** and C **1030** (shown as receivers). Without loss of generality, the illustrated situation provides a direct wireless exchange, which is illustrated without loss of generality as a line-of-sight path, and a reflected path between conference terminal A **1010** and conference terminal B **1020.** The illustrated situation also provides a single direct wireless exchange between conference terminal A **1010** and conference terminal C **1030.** To keep the figures and the description concise, discovery between other pairs of conference terminals will not be discussed further.

In figure 2b, representing an initial operational phase **200**, this communication takes place through the direct wireless exchange, in a first direction (A→B).

In figure 2c, representing a situation following the primary recovery phase **300**, the line-of-sight path in the first direction (A→B) is temporarily blocked by an obstacle (schematically shown as a cube). Communication is reestablished by using a second direction (A→B)', which uses a path reflecting off a reflector (e.g., a ceiling).

In figure 2d, representing the secondary recovery phase **400**, the second direction is also blocked by an obstacle (schematically shown as a second cube). Communication is reestablished by using a first line-of-sight direction towards conference terminal C **1030** (A→C), where conference terminal C **1030** is used as a relay to reach conference terminal B **1020.**

The system may cycle back and forth between the respective situations of figures 2b, 2c, and 2d, as obstacles appear and disappear.

While the invention has been described hereinabove with respect to some specific examples, this was done to illustrate and not to limit the invention, the scope of which is defined by the attached claims. The skilled person will understand that any features and advantages described in connection with the method of the present invention may also be applied to the system of the present invention, and vice versa.

## Claims

1. A method for configuring a wireless conferencing system comprising a plurality of conference terminals in an indoor environment, each of said conference terminals being equipped with a transceiver adapted to operate in a first mode and a second mode, said first mode being an omnidirectional mode and said second mode being a directional mode,
the method comprising:
- in a discovery phase, for each pair of conference terminals, discovering (100) a number of directions in which a direct wireless exchange of signals between said pair of conference terminals is possible, by operating a first one of said pair of conference terminals in said first mode and a second one of said pair of conference terminals in said second mode and attempting to exchange first signals while said transceiver of said second conference terminal is operated so as to vary a direction of operation;
- for a first one of said plurality of conference terminals and a second one of said plurality of conference terminals, selecting (150) a first one of said number of directions in which said direct wireless exchange of signals between said first one of said plurality of conference terminals and said second one of said plurality of conference terminals is possible as an active transmission direction;
- in an operational phase, sending (200) second signals from said first one of said plurality of conference terminals to said second one of said plurality of conference terminals, using said active transmission direction; and,
- in a primary recovery phase, if a failure in said sending (200) of said second signals is detected and if said discovering (100) resulted in at least two directions in which said direct wireless exchange between said first one of said plurality of conference terminals and said second one of said plurality of conference terminals is possible, selecting (300) a second one of said number of directions in which said direct wireless exchange of signals between said first one of said plurality of conference terminals and said second one of said plurality of conference terminals is possible as a new active transmission direction, and sending (200) third signals from said first one of said plurality of conference terminals to said second one of said plurality of conference terminals, using said new active transmission direction.

2. The method according to claim 1, further comprising:
- in a secondary recovery phase, if a failure in said sending (200) of said second signals or said sending (200) of said third signals is detected, sending (400) fourth signals from said first one of said plurality of conference terminals to a third one of said plurality of conference terminals, using a first one of said number of directions in which said direct wireless exchange of signals between said first one of said plurality of conference terminals and said third one of said plurality of conference terminals is possible, said third one of said plurality of conference terminals being used as a relay for reaching said second one of said plurality of conference terminals.

3. The method according to any of the preceding claims, wherein said transceiver operates in an ISM band between 57 GHz and 66 GHz.

4. The method according to any of the preceding claims, further comprising arranging reflectors in said indoor environment to provide additional physical paths corresponding to additional directions in which an exchange of signals between pairs of conference terminals is possible.

5. The method according to any of the preceding claims, wherein said conference terminals are adapted to visually and/or audibly signal, during said discovery phase, the detection of directions in which an exchange of signals with another one of said plurality of conference terminals is possible.

6. The method according to any of the preceding claims, further comprising running a spanning tree protocol between said plurality of conference terminals, wherein each switch-over between said first one and said second one of said number of directions in which said exchange of signals between said first one of said plurality of conference terminals and said second one of said plurality of conference terminals is possible occurs in accordance with said spanning tree protocol.

7. The method according to claim 6, wherein one of said plurality of conference terminals is an access point.

8. A computer program product comprising code means configured to cause a processor to carry out the steps of a conference terminal in a method according to any of the preceding claims.

9. A wireless conferencing system comprising a plurality of conference terminals, each of said conference terminals being equipped a with transceiver adapted to operate in a first mode and a second mode, said first mode being an omnidirectional mode and said second mode being a directional mode, wherein each of said conference terminals is configured to:
- in a discovery phase, for each other conference terminal, discover (100) a number of directions in which a direct wireless exchange of signals with said other conference terminal is possible, by operating said conference terminal in said first mode and said other conference terminal in said second mode and attempting to exchange first signals while said transceiver of said other conference terminal is operated so as to vary a direction of operation, or vice versa;
- for another one of said plurality of conference terminals, selecting (150) a first one of said number of directions in which said direct wireless exchange of signals with said other one of said plurality of conference terminals is possible as an active transmission direction;
- in an operational phase, send (200) second signals to said other one of said plurality of conference terminals, using said active transmission direction; and,
- in a primary recovery phase, if a failure in said sending (200) of said second signals is detected and if said discovering (100) resulted in at least two directions in which said direct wireless exchange with said other conference terminal is possible, select (300) a second one of said number of directions in which said direct wireless exchange of signals with said other conference terminal is possible as a new active transmission direction, and send (200) third signals to said other conference terminal, using said new active transmission direction.

10. The system according to claim 9, wherein each of said conference terminals is further configured to:
- in a secondary recovery phase, if a failure in said sending (200) of said second signals is detected, send (400) fourth signals to a third one of said plurality of conference terminals, using a first one of said number of directions in which said direct wireless exchange of signals with said third one of said plurality of conference terminals is possible, said third one of said plurality of conference terminals being used as a relay for reaching said other conference terminal.

11. The system according to any of the preceding claims, wherein said transceivers operate in an ISM band between 57 GHz and 66 GHz.

12. The system according to any of the preceding claims, further comprising reflectors arranged in said indoor environment to provide additional physical paths corresponding to additional directions in which an exchange of signals between pairs of conference terminals is possible.

13. The system according to any of the preceding claims, wherein said conference terminals are adapted to visually and/or audibly signal, during said discovery phase, the detection of directions in which an exchange of signals with another one of said plurality of conference terminals is possible.

14. The system according to any of the preceding claims, wherein said conference terminals are further configured to run a spanning tree protocol, wherein each switch-over between directions in which said exchange of signals with said other conference terminal is possible occurs in accordance with said spanning tree protocol.

15. The system according to claim 14, wherein one of said plurality of conference terminals is an access point.

## Patentansprüche

1. Verfahren zum Konfigurieren eines drahtlosen Konferenzsystems, das eine Vielzahl von Konferenzendgeräten in einer Innenumgebung umfasst, wobei jedes der Konferenzendgeräte mit einem Sendeempfänger ausgestattet ist, der angepasst ist, in einem ersten Modus und einem zweiten Modus zu arbeiten, wobei der erste Modus ein ungerichteter Modus ist und der zweite Modus ein gerichteter Modus ist,
das Verfahren umfassend:
- in einer Entdeckungsphase, für jedes Paar von Konferenzendgeräten, ein Entdecken (100) einer Anzahl von Richtungen, in welchen ein gerichteter drahtloser Austausch von Signalen zwischen dem Paar von Konferenzendgeräten möglich ist, durch Betreiben eines ersten des Paares von Konferenzendgeräten im ersten Modus und eines zweiten des Paares von Konferenzendgeräten im zweiten Modus und Versuchen, erste Signale auszutauschen, während der Sendeempfänger des zweiten Konferenzendgeräts betrieben wird, um eine Richtung des Betriebs zu variieren;
- für ein erstes der Vielzahl von Konferenzendgeräten und ein zweites der Vielzahl von Konferenzendgeräten, Auswählen (150) einer ersten der Anzahl von Richtungen, in welchen der gerichtete drahtlose Austausch von Signalen zwischen dem ersten der Vielzahl von Konferenzendgeräten und dem zweiten der Vielzahl von Konferenzendgeräten als eine aktive Übertragungsrichtung möglich ist;
- in einer Betriebsphase, Senden (200) zweiter Signale vom ersten der Vielzahl von Konferenzendgeräten an das zweite der Vielzahl von Konferenzendgeräten unter Verwendung der aktiven Übertragungsrichtung; und,
- in einer primären Erholungsphase, falls ein Fehler beim Senden (200) der zweiten Signale erfasst wird und falls das Entdecken (100) in zumindest zwei Richtungen resultierte, in welchen der gerichtete drahtlose Austausch zwischen dem ersten der Vielzahl von Konferenzendgeräten und dem zweiten der Vielzahl von Konferenzendgeräten möglich ist, Auswählen (300) einer zweiten der Anzahl von Richtungen, in welchen der gerichtete drahtlose Austausch von Signalen zwischen dem ersten der Vielzahl von Konferenzendgeräten und dem zweiten der Vielzahl von Konferenzendgeräten möglich ist, als eine neue aktive Übertragungsrichtung, und Senden (200) dritter Signale vom ersten der Vielzahl von Konferenzendgeräten zum zweiten der Vielzahl von Konferenzendgeräten unter Verwendung der neuen aktiven Übertragungsrichtung.

2. Verfahren nach Anspruch 1, ferner umfassend:
- in einer zweiten Erholungsphase, falls ein Fehler beim Senden (200) der zweiten Signale oder dem Senden (200) der dritten Signale erfasst wird, Senden (400) vierter Signale vom ersten der Vielzahl von Konferenzendgeräten zu einem dritten der Vielzahl von Konferenzendgeräten unter Verwendung einer ersten der Anzahl von Richtungen, in welchen der gerichtete drahtlose Austausch von Signalen zwischen dem ersten der Vielzahl von Konferenzendgeräten und dem dritten der Vielzahl von Konferenzendgeräten möglich ist, wobei das dritte der Vielzahl von Konferenzendgeräten als ein Relais verwendet wird, um das zweite der Vielzahl von Konferenzendgeräten zu erreichen.

3. Verfahren nach einem der vorangehenden Ansprüche, wobei der Sendeempfänger in einem ISM-Band zwischen 57 GHz und 66 GHz arbeitet.

4. Verfahren nach einem der vorangehenden Ansprüche, ferner umfassend ein Anordnen von Reflektoren in der Innenumgebung, um zusätzliche physische Pfade entsprechend zusätzlichen Richtungen, in welchen ein Austausch von Signalen zwischen Paaren von Konferenzendgeräten möglich ist, bereitzustellen.

5. Verfahren nach einem der vorangehenden Ansprüche, wobei die Konferenzendgeräte angepasst sind, während der Entdeckungsphase die Entdeckung von Richtungen sichtbar und/oder hörbar zu signalisieren, in denen ein Austausch von Signalen mit einem anderen der Vielzahl von Konferenzendgeräten möglich ist.

6. Verfahren nach einem der vorangehenden Ansprüche, ferner umfassend ein Ausführen eines Spannbaumprotokolls (Spanning Tree Protocol) zwischen der Vielzahl von Konferenzendgeräten, wobei jedes Umschalten zwischen der ersten und der zweiten der Anzahl von Richtungen, in welchen der Austausch von Signalen zwischen dem ersten der Vielzahl von Konferenzendgeräten und dem zweiten der Vielzahl von Konferenzendgeräten möglich ist, in Übereinstimmung mit dem Spannbaumprotokoll erfolgt.

7. Verfahren nach Anspruch 6, wobei eines der Vielzahl von Konferenzendgeräten ein Zugriffspunkt ist.

8. Rechnerprogrammprodukt, umfassend Codemittel, die konfiguriert sind, einen Prozessor zu veranlassen, die Schritte eines Konferenzendgeräts in einem Verfahren nach einem der vorangehenden Ansprüche auszuführen.

9. Drahtloses Konferenzsystem, umfassend eine Vielzahl von Konferenzendgeräten, wobei jedes der Konferenzendgeräte mit einem Sendeempfänger ausgestattet ist, der angepasst ist, in einem ersten Modus und einem zweiten Modus zu arbeiten, wobei der erste Modus ein ungerichteter Modus ist und der zweite Modus ein gerichteter Modus ist, wobei jedes der Konferenzendgeräte konfiguriert ist zum:
- in einer Entdeckungsphase, für jedes andere Konferenzendgerät, ein Entdecken (100) einer Anzahl von Richtungen, in welchen ein gerichteter drahtloser Austausch von Signalen mit dem anderen Konferenzendgerät durch Betreiben des Konferenzendgeräts im ersten Modus und des anderen Konferenzendgeräts im zweiten Modus möglich ist, und Versuchen, erste Signale auszutauschen, während der Sendeempfänger des anderen Konferenzendgeräts betrieben wird, um eine Richtung des Betriebs zu variieren, oder umgekehrt;
- für ein anderes der Vielzahl von Konferenzendgeräten Auswählen (150) einer ersten der Anzahl von Richtungen, in welchen der gerichtete drahtlose Austausch von Signalen mit dem anderen der Vielzahl von Konferenzendgeräten möglich ist, als eine aktive Übertragungsrichtung;
- in einer Betriebsphase, Senden (200) zweiter Signale an das andere der Vielzahl von Konferenzendgeräten unter Verwendung der aktiven Übertragungsrichtung; und,
- in einer primären Erholungsphase, falls ein Fehler beim Senden (200) der zweiten Signale erfasst wird und falls das Entdecken (100) in zumindest zwei Richtungen resultierte, in welchen der gerichtete drahtlose Austausch mit dem anderen Konferenzendgerät möglich ist, Auswählen (300) einer zweiten der Anzahl von Richtungen, in welchen der gerichtete drahtlose Austausch von Signalen mit dem anderen Konferenzendgerät möglich ist, als eine neue aktive Übertragungsrichtung, und Senden (200) dritter Signale zum anderen Konferenzendgerät unter Verwendung der neuen aktiven Übertragungsrichtung.

10. System nach Anspruch 9, wobei jedes der Konferenzendgeräte ferner konfiguriert ist zum:
- in einer zweiten Erholungsphase, falls ein Fehler beim Senden (200) der zweiten Signale erfasst wird, Senden (400) vierter Signale zu einem dritten der Vielzahl von Konferenzendgeräten unter Verwendung einer ersten der Anzahl von Richtungen, in welchen der gerichtete drahtlose Austausch von Signalen mit dem dritten der Vielzahl von Konferenzendgeräten möglich ist, wobei das dritte der Vielzahl von Konferenzendgeräten als ein Relais verwendet wird, um das andere Konferenzendgerät zu erreichen.

11. System nach einem der vorangehenden Ansprüche, wobei die Sendeempfänger in einem ISM-Band zwischen 57 GHz und 66 GHz arbeiten.

12. System nach einem der vorangehenden Ansprüche, ferner umfassend Reflektoren, die in der Innenumgebung angeordnet sind, um zusätzliche physische Pfade entsprechend zusätzlichen Richtungen, in denen ein Austausch von Signalen zwischen Paaren von Konferenzendgeräten möglich ist, bereitzustellen.

13. System nach einem der vorangehenden Ansprüche, wobei die Konferenzendgeräte angepasst sind, während der Entdeckungsphase die Entdeckung von Richtungen sichtbar und/oder hörbar zu signalisieren, in denen ein Austausch von Signalen mit einem anderen der Vielzahl von Konferenzendgeräten möglich ist.

14. System nach einem der vorangehenden Ansprüche, wobei die Konferenzendgeräte ferner konfiguriert sind, ein Spannbaumprotokoll auszuführen, wobei jedes Umschalten zwischen Richtungen, in welchen der Austausch von Signalen mit dem anderen Konferenzendgerät möglich ist, in Übereinstimmung mit dem Spannbaumprotokoll erfolgt.

15. System nach Anspruch 14, wobei eines der Vielzahl von Konferenzendgeräten ein Zugriffspunkt ist.

## Revendications

1. Procédé pour configurer un système de téléconférence sans fil comprenant une pluralité de terminaux de téléconférence dans un environnement intérieur, chacun desdits terminaux de téléconférence étant équipé d'un émetteur-récepteur conçu pour fonctionner dans un premier mode et un second mode, ledit premier mode étant un mode omnidirectionnel et ledit second mode étant un mode directionnel,
le procédé comprenant :
- dans une phase de découverte, pour chaque couple de terminaux de conférence, la découverte (100) d'un certain nombre de directions dans lesquelles un échange sans fil direct de signaux entre ledit couple de terminaux de téléconférence est possible, en faisant fonctionner un premier terminal dudit couple de terminaux de téléconférence dans ledit premier mode et un second terminal dudit couple de terminaux de téléconférence dans ledit second mode et en essayant d'échanger des premiers signaux tandis que l'on fait fonctionner ledit émetteur-récepteur dudit second terminal de téléconférence afin de faire varier une direction de fonctionnement ;
- pour un premier terminal de ladite pluralité de terminaux de téléconférence et un deuxième de ladite pluralité de terminaux de téléconférence, la sélection (150) d'une première dudit nombre de directions dans lesquelles ledit échange sans fil direct de signaux entre ledit premier terminal de ladite pluralité de terminaux de téléconférence et ledit deuxième terminal de ladite pluralité de terminaux de téléconférence est possible en tant que direction d'émission active ;
- dans une phase opérationnelle, l'envoi (200) de deuxièmes signaux en provenance dudit premier terminal de ladite pluralité de terminaux de téléconférence audit second terminal de ladite pluralité de terminaux de téléconférence, en utilisant ladite direction d'émission active ; et
- dans une phase de récupération primaire, si une défaillance dans ledit envoi (200) de dits deuxièmes signaux est détectée et si ladite découverte (100) a abouti à au moins deux directions dans lesquelles ledit échange sans fil direct entre ledit premier terminal de ladite pluralité de terminaux de téléconférence et ledit deuxième terminal de ladite pluralité de terminaux de téléconférence est possible, la sélection (300) d'une deuxième dudit nombre de directions dans lesquelles ledit échange sans fil direct de signaux entre ledit premier terminal de ladite pluralité de terminaux de téléconférence et ledit deuxième terminal de ladite pluralité de terminaux de téléconférence est possible en tant que nouvelle direction d'émission active, et l'envoi (200) de troisièmes signaux en provenance dudit premier terminal de ladite pluralité de terminaux de téléconférence audit deuxième terminal de ladite pluralité de terminaux de téléconférence, en utilisant ladite nouvelle direction d'émission active.

2. Procédé selon la revendication 1, comprenant en outre :
- dans une phase de récupération secondaire, si une défaillance dans ledit envoi (200) de dits deuxièmes signaux ou ledit envoi (200) de dits troisièmes signaux est détectée, l'envoi (400) de quatrièmes signaux en provenance dudit premier terminal de ladite pluralité de terminaux de téléconférence à un troisième terminal de ladite pluralité de terminaux de téléconférence, en utilisant une première dudit nombre de directions dans lesquelles ledit échange sans fil direct de signaux entre ledit premier terminal de ladite pluralité de terminaux de téléconférence et ledit troisième terminal de ladite pluralité de terminaux de téléconférence est possible, ledit troisième terminal de ladite pluralité de terminaux de téléconférence étant utilisé comme un relais pour atteindre ledit deuxième terminal de ladite pluralité de terminaux de téléconférence.

3. Procédé selon l'une quelconque des revendications précédentes, dans lequel ledit émetteur-récepteur fonctionne dans une bande ISM entre 57 GHz et 66 GHz.

4. Procédé selon l'une quelconque des revendications précédentes, comprenant en outre l'agencement de réflecteurs dans ledit environnement intérieur pour fournir des chemins physiques supplémentaires correspondant à des directions supplémentaires dans lesquelles un échange de signaux entre des couples de terminaux de téléconférence est possible.

5. Procédé selon l'une quelconque des revendications précédentes, dans lequel lesdits terminaux de téléconférence sont conçus pour signaler visuellement et/ou de façon audible, pendant ladite phase de découverte, la détection de directions dans lesquelles un échange de signaux avec un autre terminal de ladite pluralité de terminaux de téléconférence est possible.

6. Procédé selon l'une quelconque des revendications précédentes, comprenant en outre l'exécution d'un protocole de l'arbre maximal entre ladite pluralité de terminaux de téléconférence, dans lequel chaque passage entre ladite première direction et ladite deuxième direction dudit nombre de directions dans lesquelles ledit échange de signaux entre ledit premier terminal de ladite pluralité de terminaux de téléconférence et ledit deuxième terminal de ladite pluralité de terminaux de téléconférence est possible se produit selon ledit protocole de l'arbre maximal.

7. Procédé selon la revendication 6, dans lequel l'un de ladite pluralité de terminaux de téléconférence est un point d'accès.

8. Produit formant programme informatique comprenant un moyen de code configuré pour amener un processeur à effectuer les étapes d'un terminal de téléconférence dans un procédé selon l'une quelconque des revendications précédentes.

9. Système de téléconférence sans fil comprenant une pluralité de terminaux de téléconférence, chacun desdits terminaux de téléconférence étant équipé d'un émetteur-récepteur conçu pour fonctionner dans un premier mode et un second mode, ledit premier mode étant un mode omnidirectionnel et ledit second mode étant un mode directionnel, dans lequel chacun desdits terminaux de téléconférence est configuré pour :
- dans une phase de découverte, pour chaque autre terminal de téléconférence, découvrir (100) un certain nombre de directions dans lesquelles un échange sans fil direct de signaux avec ledit autre terminal de téléconférence est possible, en faisant fonctionner ledit terminal de téléconférence dans ledit premier mode et ledit autre terminal de téléconférence dans ledit second mode et en essayant d'échanger des premiers signaux tandis que l'on fait fonctionner ledit émetteur-récepteur dudit autre terminal de téléconférence afin de faire varier une direction de fonctionnement, ou vice versa ;
- pour un autre terminal de ladite pluralité de terminaux de téléconférence, sélectionner (150) une première direction dudit nombre de directions dans lesquelles ledit échange sans fil direct de signaux avec ledit autre terminal de ladite pluralité de terminaux de téléconférence est possible en tant que direction d'émission active ;
- dans une phase opérationnelle, envoyer (200) des deuxièmes signaux audit autre terminal de ladite pluralité de terminaux de téléconférence, en utilisant ladite direction d'émission active ; et
- dans une phase de récupération primaire, si une défaillance dans ledit envoi (200) de dits deuxièmes signaux est détectée et si ladite découverte (100) a abouti à au moins deux directions dans lesquelles ledit échange sans fil direct avec ledit autre terminal de téléconférence est possible, sélectionner (300) une deuxième direction dudit nombre de directions dans lesquelles ledit échange sans fil direct de signaux avec ledit autre terminal de téléconférence est possible en tant que nouvelle direction d'émission active, et envoyer (200) de troisièmes signaux audit autre terminal de téléconférence, en utilisant ladite nouvelle direction de transmission active.

10. Système selon la revendication 9, dans lequel chacun desdits terminaux de téléconférence est en outre configuré pour :
- dans une phase de récupération secondaire, si une défaillance dans ledit envoi (200) de dits deuxièmes signaux est détectée, envoyer (400) des quatrièmes signaux à un troisième terminal de ladite pluralité de terminaux de téléconférence, en utilisant une première direction dudit nombre de directions dans lesquelles ledit échange sans fil direct de signaux avec ledit troisième terminal de ladite pluralité de terminaux de téléconférence est possible, ledit troisième terminal de ladite pluralité de terminaux de téléconférence étant utilisé comme un relais pour atteindre ledit autre terminal de téléconférence.

11. Système selon l'une quelconque des revendications précédentes, dans lequel lesdits émetteurs-récepteurs fonctionnent dans une bande ISM entre 57 GHz et 66 GHz.

12. Système selon l'une quelconque des revendications précédentes, comprenant en outre des réflecteurs agencés dans ledit environnement d'intérieur pour fournir des chemins physiques supplémentaires correspondant à des directions supplémentaires dans lesquelles un échange de signaux entre des couples de terminaux de téléconférence est possible.

13. Système selon l'une quelconque des revendications précédentes, dans lequel lesdits terminaux de téléconférence sont conçus pour signaler visuellement et/ou de façon audible, pendant ladite phase de découverte, la détection de directions dans lesquelles un échange de signaux avec un autre terminal de ladite pluralité de terminaux de téléconférence est possible.

14. Système selon l'une quelconque des revendications précédentes, dans lequel lesdits terminaux de téléconférence sont en outre configurés pour exécuter un protocole de l'arbre maximal, dans lequel chaque passage entre des directions dans lesquelles ledit échange de signaux avec ledit autre terminal de téléconférence est possible se produit selon ledit protocole de l'arbre maximal.

15. Système selon la revendication 14, dans lequel un terminal de ladite pluralité de terminaux de téléconférence est un point d'accès.
